# EUROPEAN PATENT SPECIFICATION

(11) **EP 4 363 078 B1**
(45) Date of publication and mention of the grant of the patent: **20.08.2025**
(21) Application number: 21777789.5
(22) Date of filing: 17.09.2021
(51) Int. Cl.: B01D 33/04, B01D 33/056, B01D 33/50

(54) **FILTRATION ARRANGEMENTS AND FILTRATION APPARATUS**
FILTERANORDNUNGEN UND FILTRATIONSVORRICHTUNG
AGENCEMENTS DE FILTRATION ET APPAREIL DE FILTRATION

(30) Priority: 01.07.2021 WO PCT/EP2021/068151
(43) Date of publication of application: 08.05.2024
(73) Proprietor: RENASYS AS, 6800 Førde (NO)
(72) Inventor: MELHUS, Trond, 4329 Sandnes (NO); MALMIN, Arne, 4306 Sandnes (NO)
(74) Representative: Kransell & Wennborg KB
(86) International application number: PCT/EP2021/075694
(87) International publication number: WO 2023/274568

(56) References cited:
- EP-A1- 3 795 229
- WO-A1-2011/096802
- WO-A1-2021/101379

## Description

### Technical Field

The present disclosure generally relates to filtration of liquid. In particular, a filtration arrangement comprising two wheels, a filtration arrangement comprising a fluid ejecting device, and a filtration apparatus comprising such filtration arrangements, are provided.

### Background

One of the major challenges in the world today is to provide safe drinking water for humans and animals. Some main contributions to pollution of water come from untreated sewage, untreated process water from industries, agricultural waste and runoff water. This water needs to be treated before it is safe to drink.

One way to provide safe drinking water from polluted water is to evaporate the polluted water under vacuum. By changing the phase of the water to steam under vacuum, the water is boiling at a low temperature. The disadvantage with this method is that it requires a lot of energy to change the phase of the water to steam under vacuum.

WO 2020164730 A1 discloses a filtration apparatus for filtrating particles from fluid, the filtration apparatus comprising a filtration vessel; at least one filtering element for removing particles from fluid passing therethrough, the at least one filtering element being arranged to move along a path into the filtration vessel, and out from the filtration vessel; a filtration inlet arranged to convey a mixture of particles and fluid to the at least one filtering element within the filtration vessel; and a filtration outlet arranged to convey fluid, filtrated by the at least one filtering element, out from the filtration vessel; wherein the filtration apparatus is configured to establish a differential pressure over the at least one filtering element inside the filtration vessel.

WO 2011096802 A1 discloses a filter device comprising a first compartment, a second compartment, a plate between the compartments, a filter cloth and transport wheels. In operational mode, longitudinal edges of the filter cloth will be clamped between the transport wheels on the one hand and plate on the other.

WO 2021101379 A1 discloses a filter device comprising a first compartment, a second compartment, a perforated, semicircular plate, a filter cloth and one or more rotatable transport wheels which, with interposing of the filter cloth, engage in substantially form-fitting manner and under bias on the curved plate.

EP 3795229 A1 discloses a filtering device comprising an inner tank and two walls defining a first chamber.

### Summary

One object of the present disclosure is to provide a filtration arrangement for a filtration apparatus, which filtration arrangement has an improved performance.

A further object of the present disclosure is to provide a filtration arrangement for a filtration apparatus, which filtration arrangement improves cleanliness of a filtrated liquid.

A still further object of the present disclosure is to provide a filtration arrangement for a filtration apparatus, which filtration arrangement has an energy efficient operation.

A still further object of the present disclosure is to provide a filtration arrangement for a filtration apparatus, which filtration arrangement has reduced friction losses.

A still further object of the present disclosure is to provide a filtration arrangement for a filtration apparatus, which filtration arrangement has improved sealing.

A still further object of the present disclosure is to provide a filtration arrangement for a filtration apparatus, which filtration arrangement enables a more efficient cleaning of a filter cloth.

A still further object of the present disclosure is to provide a filtration arrangement for a filtration apparatus, which filtration arrangement solves several or all of the foregoing objects.

A still further object of the present disclosure is to provide a filtration apparatus comprising a filtration arrangement, which filtration apparatus solves one, several or all of the foregoing objects.

According to a first aspect, there is provided a filtration arrangement for a filtration apparatus for filtrating liquid according to claim 1. The filtration arrangement comprises a filtration vessel; a continuous filtering element for removing particles from liquid passing therethrough, the filtering element being arranged to move along a path into the filtration vessel and out from the filtration vessel; and two wheels sealingly engaging the filtering element on opposite sides thereof inside the filtration vessel, where each of the two wheels is rotatable relative to the filtration vessel along with movement of the filtering element. The filtration vessel further comprises two circular portions. The two wheels are forced into a respective of the circular portions with the filtering element therebetween. The filtration arrangement further comprises at least one stationary wheel sealing member. The stationary wheel sealing member is arranged to seal between the filtering element and a respective of the circular portions.

The filtration arrangement may comprise a filtration volume. The filtration volume may be delimited by the two wheels and the part of the filtering element currently engaged by the wheels.

Since the wheels sealingly engage the filtering element and rotate along with the movement of the filtering element, friction losses between the wheels and the filtering element can be eliminated while at the same time providing an efficient sealing of the filtration volume inside the filtration vessel. A tight sealing is particularly valuable when the filtration apparatus is used with an underpressure downstream of the filtering element. Should the sealing not be tight, there is a risk that unfiltered liquid passes on the side of the filtering element and the filtration performance is reduced. The wheels may press the filtering element against the filtration vessel.

The filtration arrangement enables a tangential speed of the wheels to be the same as a speed of the filtering element. Since there is no friction due to relative movements between the wheels and the filtering element, the filtration arrangement is more energy efficient. Friction induced vibrations with consequential leakage can also be avoided. Since the wheels rotate together with the filtering element, the wheels and the filtering element may be said to provide a rotatable seal.

The filtering element may be of any type as described herein. The filtering element may comprise a filter cloth and a carrier supporting the filter cloth. Each of the filter cloth and the carrier may be continuous. The filter cloth and the carrier may have substantially the same, or the same, width in a lateral direction. As used herein, a lateral direction is perpendicular to the path. The carrier may be a carrier belt.

The two wheels may rotate independently or may be fixed to each other. The two wheels may have the same shape, dimension and/or mass. The two wheels may be separated from each other in the lateral direction.

The filter cloth may comprise a wire cloth, such as a metal wire cloth or alloy wire cloth, having a three-dimensional pore geometry. Such filter cloth can provide a substantially constant, or constant, permeability for filtrations after a nominal degree of clogging of the filter cloth. The wire cloth may comprise warp wires and weft wires crossing each other and interwoven by a weave pattern. The warp wires may be formed in at least two different configurations to define warp wires of first and second types. A length of the first type of warp wires may deviate from a length of the second type of warp wires in relation to a particular length unit. Pores may be formed in interstices between sections of two neighbouring warp wires and crossing sections of two neighbouring weft wires.

The filtration arrangement may comprise a motor. The motor may be configured to drive the filtering element along the path. In case the filter cloth is arranged on a continuous carrier, the motor may drive the carrier. The filtering element may be moved continuously or intermittently in operation of the filtration apparatus.

Throughout the present disclosure, the liquid may be water. The filtration vessel may be made of steel. The filtration arrangement according to the first aspect may or may not comprise the fluid ejecting device according to the example useful for understanding the invention. The filtration arrangement according to the first aspect may however be the same as the example useful for understanding the invention.

The two wheels may be vertically movable relative to the filtration vessel. The two wheels are thereby allowed to rest on the filtering element. By allowing the wheels to move downwards, the filtering element is compressed and the sealing is improved. The two wheels may be arranged to move vertically downwards by means of gravity. Thus, the larger the weight of the wheels is, the tighter the sealing of the filtering element and the filtration volume becomes. Optionally, a forcing device, such as a spring, can be provided for each wheel to provide an additional force of the wheels against the filtering element. A vertical movement comprises any movement having a vertical component. The wheels may for example move purely vertically or in a direction inclined with respect to vertical.

Each wheel may comprise at least one seat. In this case, the filtering element may be received in the seats. Each seat may extend along the perimeter of the respective wheel. Optionally, each wheel may comprise a tortous structure and the filtering element may be received in the tortous structure. In this way, the filtration arrangement comprises a rotatable labyrinth seal. Each such labyrinth seal comprises several seats.

Each circular portion may have an angular extension of 90 degrees to 180 degrees, such as 120 degrees to 180 degrees.

Each stationary wheel sealing member may be received in a respective of the seat. Thus, each of the stationary wheel sealing members and the filtering element may be received in a seat, either in a common seat or in unique seats.

The at least one stationary wheel sealing member may be made of plastic material. The plastic material reduces friction between the filtering element and the one or more stationary wheel sealing members.

The filtration vessel may comprise two cavities laterally outside the respective wheels. The cavities may collect any overspill from the filtration volume due to splashing. Due to the tight sealing of the filtering element by the wheels, liquid in the cavities is prevented from passing to a region downstream of the filtering element. The filtration arrangement thus prevent any unfiltered liquid from reaching filtered liquid. Liquid in the cavities may be guided back into the filtration volume at least intermittently, for example by pumping out the liquid or by injecting liquid thereto to establish circulation. It can thereby be prevented that liquid remains in the cavities for long periods of time.

The filtration arrangement may further comprise a stationary cavity sealing member in a bottom of each cavity. Each stationary cavity sealing member may be made of a foam material and/or rubber.

According to an example useful for understanding the invention, there is provided a filtration arrangement for a filtration apparatus for filtrating liquid, the filtration arrangement comprising a filtration vessel; a continuous filtering element for removing particles from liquid passing therethrough, the filtering element being arranged to move along a path into the filtration vessel and out from the filtration vessel, and the filtering element comprising a filter cloth and a carrier supporting the filter cloth; and a fluid ejecting device configured to provide a varying stream of fluid towards the filter cloth to induce vibrations in the filter cloth.

Due to the fluid stream, particles are blown away from the filter cloth, such as blown through the filter cloth. The variations or oscillations of the fluid stream however also induces vibrations in the filter cloth. These vibrations also serve to remove particles from the filter cloth. That is, the vibrations cause the particles to be shaken out from the filter cloth. Thereby, the cleaning of the filter cloth is more efficient. The vibrations have a great impact on the cleaning efficiency, in addition to the fluid stream as such. The filtration arrangement according to this example thus has a greatly improved cleaning efficiency in comparison with using a fluid ejecting device that supplies a constant fluid stream. Optionally, the fluid ejecting device may be configured to provide a stream of fluid that varies such that an Eigenfrequency of the filter cloth is excited. In this way, the cleaning efficiency can be further improved.

Since the filtering element is continuous, the filtering element forms a loop. The filter cloth may surround the carrier. That is, the carrier may be arranged inside the filter cloth. The fluid ejecting device may be configured to provide the fluid stream in an outward direction with respect to the loop. Alternatively, or in addition, the fluid ejecting device may be configured to provide the fluid stream vertically downwards. A vertically downward direction in this regard may be angled 1 degree to 179 degrees to horizontal.

The filtration arrangement may comprise a plurality of rollers for supporting the filtering element and guiding the filtering element along the path. The fluid ejecting device may be arranged at a position where the filter cloth hangs freely. The filter cloth may be suspended with a slack between two rollers. In this way, larger vibrations of the filter cloth are allowed.

The fluid may be air. The fluid stream may oscillate to vary, such as by a directional oscillation and/or by a flow oscillation. With a directional oscillation, the fluid stream may have a substantially constant, or constant, flow, but the flow direction of the fluid stream varies. With a flow oscillation, the fluid stream may have a substantially constant, or constant, flow direction, but the flow of the fluid stream varies.

The filtration arrangement according to the example useful for understanding the invention may or may not comprise the wheels according to the first aspect. The filtration arrangement according to the example useful for understanding the invention may however be the same as the first aspect.

The filtration arrangement may be configured to separate the filter cloth from the carrier outside of the filtration vessel. In this case, the fluid ejecting device may be positioned between the carrier and the filter cloth. In this way, the fluid ejecting device can simultaneously provide the stream of fluid and support the carrier. Moreover, this enables the fluid ejecting device to be positioned close to the filter cloth to improve cleaning. In many implementations, the carrier will never "see" the particles and does therefore not need cleaning.

The fluid ejecting device may comprise at least one fluid ejecting tube arranged to oscillate in a lateral direction with respect to the path. In this way, the fluid ejecting device can provide a varying stream of fluid towards the filter cloth to induce vibrations in the filter cloth. Each fluid ejecting tube may be flexible and/or may be flexibly suspended. By increasing a fluid pressure supplied to the fluid ejecting device, the oscillation frequency of the one or more fluid ejecting tubes can be increased and vice versa. The fluid ejecting device may comprise a plurality of fluid ejecting tubes, such as at least three fluid ejecting tubes.

The fluid ejecting device may comprise a tube guide associated with each fluid ejecting tube. Each tube guide may be configured to guide the fluid ejecting tube in the lateral direction.

The fluid ejecting device may be configured to provide a varying flow of fluid towards the filter cloth. Also in this way, the fluid ejecting device can provide a varying stream of fluid towards the filter cloth to induce vibrations in the filter cloth.

The fluid ejecting device may comprise at least one carrier support for supporting the carrier. The fluid ejecting device may further comprise a fluid pipe for supplying fluid to the one or more fluid ejecting tubes. In this case, each carrier support may at least partly enclose the fluid pipe. The fluid pipe may extend in the lateral direction.

According to a second aspect, there is provided a filtration apparatus for filtrating liquid , the filtration apparatus comprising a filtration arrangement according to the first aspect and/or according to the example useful for understanding the invention. The filtration apparatus may be of the type described in international patent application PCT/EP2021/068151, the full content of which is hereby incorporated by reference. The filtration apparatus may be configured to filtrate liquid by controlling a differential pressure of the liquid over the filtering element, and controlling a passing time of a filter flow of the liquid through the filtering element in conjunction with the differential pressure, as described in international patent application PCT/EP2021/068151. By providing a rapid pressure drop over the filtering element, any bacteria and parasites in the liquid will be killed.

The filtration apparatus may be used to filtrate any liquid where it is desired to reduce an amount of living organisms. The inlet water to the filtering element may or may not be pretreated. Examples of pretreatment include precleaning and preheating.

The filtration apparatus may further comprise an outlet line downstream of the filtering element, a collection volume downstream of the outlet line, a liquid outlet device configured to control a collection volume liquid flow of the liquid out from the collection volume, a gas outlet device configured to control a gas flow out from the collection volume, and a control system configured to control a differential pressure of the liquid over the filtering element and to control a passing time of a filter flow of the liquid through the filtering element in conjunction with the differential pressure. The control of the differential pressure and the passing time may comprise controlling the liquid outlet device to control the collection volume liquid flow, and controlling the gas outlet device to control the gas flow.

The outlet line may be arranged downstream of the filtration vessel, such as between the filtration vessel and the collection volume. The collection volume may be closed to atmosphere.

The filtration apparatus may further comprise a liquid inlet device positioned upstream of the filtering element, e.g. on an inlet line. By means of the liquid inlet device, the inlet flow of the liquid to the filtering element can be controlled.

The filtration apparatus may further comprise an upstream filter. The upstream filter may be positioned between the inlet line and the filtering element or in the inlet line.

The outlet line may have a geodetic difference in height of at least one meter. The filtration apparatus may be configured to establish the differential pressure by means of downstream movement of the liquid in the outlet line.

### Brief Description of the Drawings

Further details, advantages and aspects of the present disclosure will become apparent from the following description taken in conjunction with the drawings, wherein:
- Fig. 1:: schematically represents a cross-sectional side view of a filtration apparatus comprising a filtration arrangement;
- Fig. 2:: schematically represents a perspective side view of the filtration arrangement;
- Fig. 3:: schematically represents a partial perspective side view of the filtration arrangement;
- Fig. 4:: schematically represents a partial top view of the filtration arrangement;
- Fig. 5:: schematically represents a partial cross-sectional top view of the filtration arrangement;
- Fig. 6:: schematically represents a partial cross-sectional top view of the filtration arrangement;
- Fig. 7:: schematically represents a cross-sectional top view of a further example of a sealing of the filtration arrangement;
- Fig. 8:: schematically represents a partial perspective side view of the filtration arrangement;
- Fig. 9:: schematically represents a partial perspective rear view of the filtration arrangement; and
- Fig. 10:: schematically represents a partial perspective side view of a fluid ejecting device.

### Detailed Description

In the following, a filtration arrangement comprising two wheels, a filtration arrangement comprising a fluid ejecting device, and a filtration apparatus comprising such filtration arrangement, will be described. The same or similar reference numerals will be used to denote the same or similar structural features.

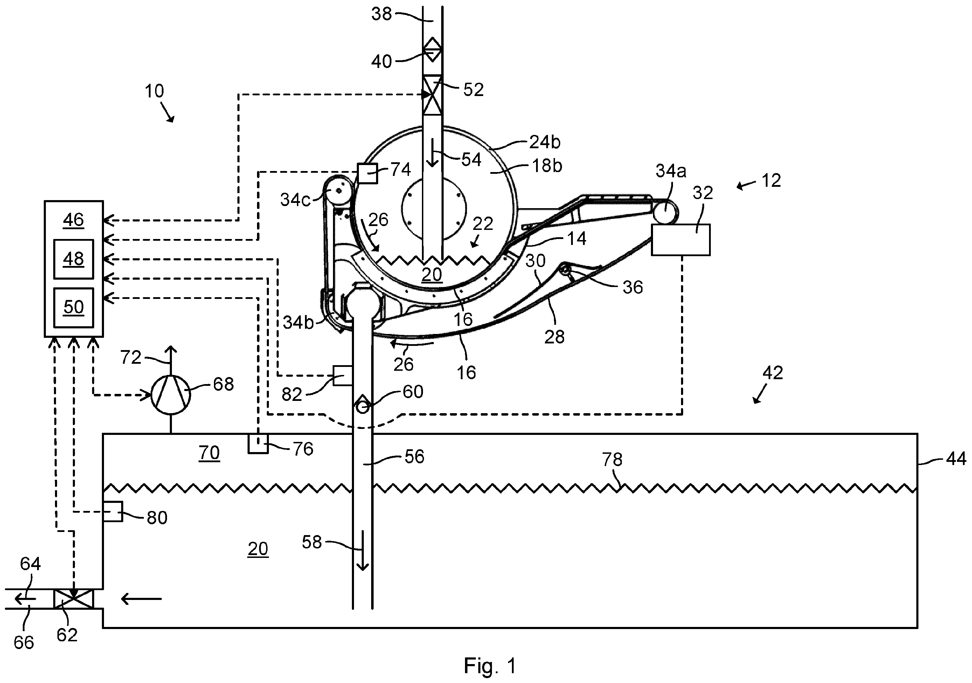

Fig. 1 schematically represents a cross-sectional side view of a filtration apparatus 10. The filtration apparatus 10 comprises a filtration arrangement 12. The filtration apparatus 10 comprises a filtration vessel 14, a continuous filtering element 16 and two wheels 18a, 18b (only one wheel 18b is visible in Fig. 1). The filtering element 16 is configured to remove particles from a liquid passing therethrough. The liquid is here exemplified as water 20.

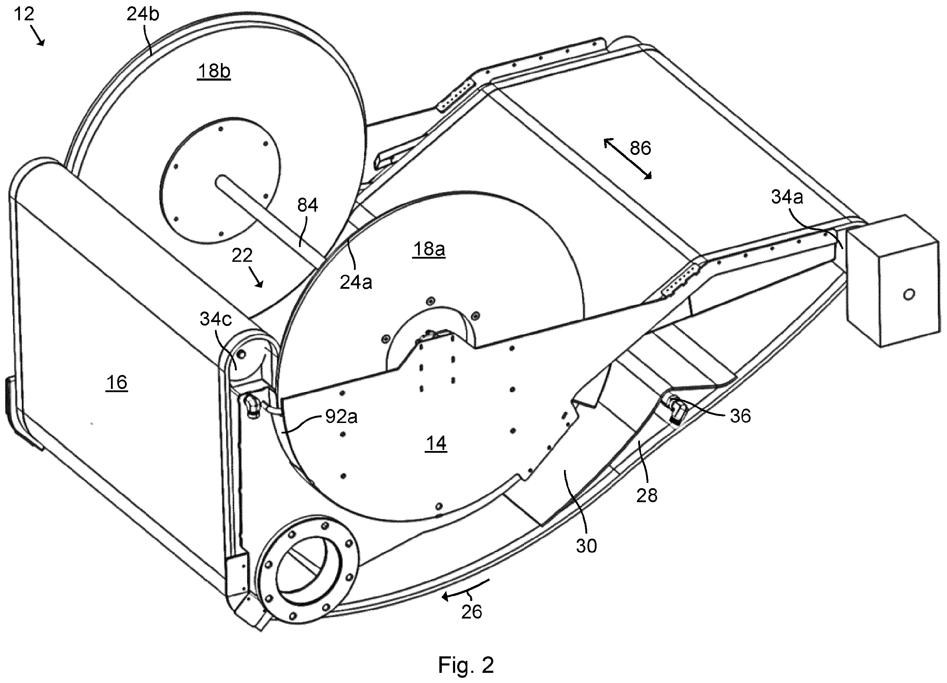

A filtration volume 22 is delimited by the two wheels 18a, 18b and by the filtering element 16 inside the filtration vessel 14. Water 20 to be filtrated is received in the filtration volume 22. The wheel 18b comprises a seat 24b. The wheel 18a comprises a corresponding seat 24a (Fig. 2).

As shown in Fig. 1, the filtering element 16 is movable in a loop along a path 26. The filtering element 16 can move continuously or intermittently into a filtration region inside the filtration vessel 14 and out from the filtration vessel 14. The filtration vessel 14 may be made of steel.

The filtering element 16 here comprises a continuous filter cloth 28 and a continuous carrier, here exemplified as a carrier belt 30. The carrier belt 30 supports the filter cloth 28. The filter cloth 28 is arranged outside the carrier belt 30. The filter cloth 28 may for example be a Minimesh ^{®} RPD HIFLO-S sold by Haver & Boecker, such as RPD HIFLO 5 S, 10 S, 15 S, 20 S, 30 S or 40 S.

The filter cloth 28 may for example have a pore size of at least 1 µm and/or less than 50 µm. The filter cloth 28 may for example have a thickness of 0.20 mm to 0.25 mm. The carrier belt 30 may for example have a thickness of at least 0.20 mm and/or less than 5 mm.

The filtration arrangement 12 further comprises an electric motor 32. The motor 32 is configured drive the filtering element 16 along the path 26 and is configured to control the speed of the filtering element 16.

The filtration arrangement 12 of this example further comprises a plurality of rollers. In Fig. 1, three rollers 34a, 34b and 34c can be seen. The rollers 34a-34c support and guide the filtering element 16 along the path 26. The motor 32 is here arranged to drive one of the rollers 34a engaging the carrier belt 30 to cause the filtering element 16 to move along the path 26. Also the wheels 18a, 18b support and guide the filtering element 16 and thereby function as rollers.

The filtration apparatus 10 further comprises a fluid ejecting device 36. The fluid ejecting device 36 is configured to clean a passive part the filtering element 16, i.e. outside the filtration volume 22, here below the filtration vessel 14. The fluid ejecting device 36 is configured to force filtride or filter cake away from the filtering element 16 by pressurized air. The fluid ejecting device 36 is described in greater detail below.

The filtration apparatus 10 of this example further comprises an inlet line 38. The inlet line 38 is here exemplified as a vertical pipe for conducting water 20 to be filtrated to the filtration vessel 14.

The filtration apparatus 10 of this example further comprises an upstream filter 40. The upstream filter 40 has a substantially higher permeability than the filtering element 16 and may therefore be referred to as a coarse filter.

The filtration apparatus 10 of this example further comprises a collection arrangement 42. As shown in Fig. 1, the collection arrangement 42 is positioned vertically below the filtration arrangement 12. The collection arrangement 42 comprises a collection tank 44. The collection tank 44 is one example of a collection volume according to the present disclosure.

The filtration apparatus 10 further comprises a control system 46. The control system 46 comprises a data processing device 48 and a memory 50 having a computer program stored thereon. The computer program comprises program code which, when executed by the data processing device 48 causes the data processing device 48 to perform, or command performance of, various steps as described herein. The control system 46 is for example in signal communication with the motor 32 to control the motor 32.

The filtration apparatus 10 of this example further comprises an inlet valve 52. The inlet valve 52 is one example of a liquid inlet device according to the present disclosure. By controlling the inlet valve 52, an inlet flow 54 through the inlet line 38 of water 20 to be filtrated can be controlled. The inlet valve 52 is in signal communication with the control system 46. The control system 46 can control an opening degree of the inlet valve 52.

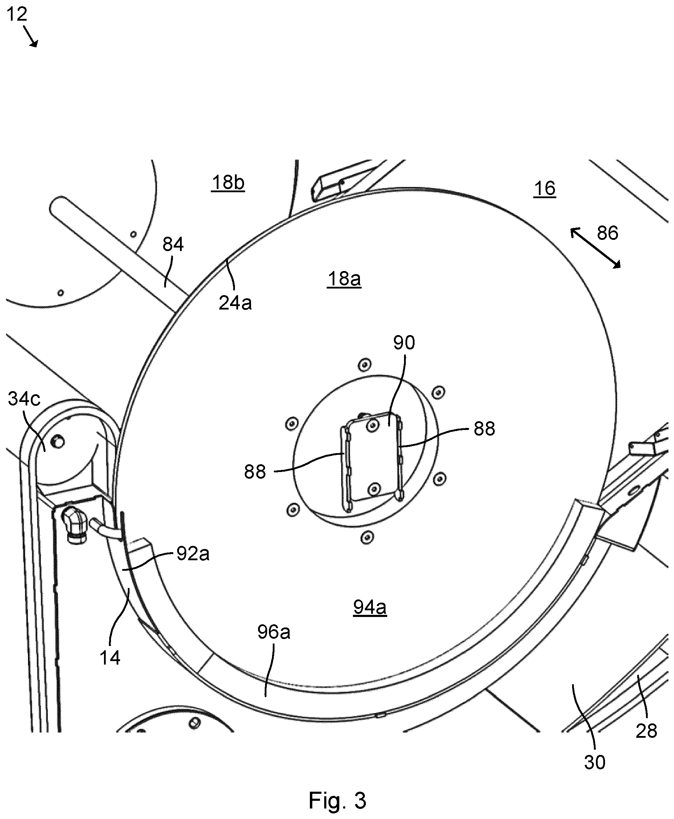

The filtration apparatus 10 of this example further comprises an outlet line 56. The outlet line 56 is here exemplified as a vertical pipe. The outlet line 56 does however not necessarily need to be vertically oriented. An upstream and geodetically highest end of the outlet line 56 is open to the filtering element 16 inside the filtration vessel 14. A downstream and geodetically lowest end of the outlet line 56 is open to the collection tank 44. Besides the upstream end and the downstream end, the outlet line 56 is closed. The outlet line 56 thus conducts water 20 from the filtration vessel 14 below the filtering element 16 to the collection tank 44. Reference numeral 58 in Fig. 3 denotes an outlet line flow through the outlet line 56. The filtration apparatus 10 further comprises a one-way outlet line valve 60 in the outlet line 56, here exemplified as a check valve.

The outlet line 56 may have a vertical extension of one meter to ten meters. A vertical drop of water 20 below the filtering element 16 is thereby provided by the outlet line 56. For this reason, the outlet line 56 may be referred to as a drop pipe. A water drop of five meters in the outlet line 56 may correspond to a differential pressure of 500 mbar over the filtering element 16, and a water drop of eight meters in the outlet line 56 may correspond to a differential pressure of 800 mbar over the filtering element 16.

The filtration apparatus 10 of this example further comprises an outlet valve 62. The outlet valve 62 is one example of a liquid outlet device according to the present disclosure. One alternative example of a liquid outlet device according to the present disclosure is a liquid pump. By controlling the outlet valve 62, a collection volume liquid flow 64 out from the collection tank 44 through a collection outlet 66 can be controlled. The outlet valve 62 is positioned in a geodetically low region of the collection tank 44. The outlet valve 62 is in signal communication with the control system 46. The control system 46 can control an opening degree of the outlet valve 62.

The filtration apparatus 10 of this example further comprises a vacuum pump 68. The vacuum pump 68 is one example of a gas outlet device according to the present disclosure. The vacuum pump 68 is arranged in parallel with the outlet valve 62.

The vacuum pump 68 is configured to suck gases 70 out from the top of the collection tank 44 to thereby evacuate the gases 70. By controlling the vacuum pump 68, a gas flow 72 out from the collection tank 44 can be controlled. The vacuum pump 68 is positioned in, and connected to, a geodetically highest region of the collection tank 44. The vacuum pump 68 is in signal communication with the control system 46. The control system 46 can control a speed of the vacuum pump 68, for example by means of a variable frequency drive.

The collection tank 44 is positioned downstream of the outlet line 56. As shown in Fig. 1, the collection tank 44 is closed to atmosphere. In this example, the only interfaces out from the interior volume of the collection tank 44 are through the outlet line 56, through the outlet valve 62 and through the vacuum pump 68.

The filtration apparatus 10 of this example further comprises an inlet level sensor 74. By means of the inlet level sensor 74, an inlet level of water 20 in the filtration vessel 14 can be monitored. The inlet level sensor 74 is in signal communication with the control system 46.

The filtration apparatus 10 of this example further comprises an outlet level sensor 76. By means of the outlet level sensor 76, an outlet level 78 of water 20 in the collection tank 44 can be monitored. The outlet level sensor 76 is in signal communication with the control system 46.

The filtration apparatus 10 of this example further comprises a temperature sensor 80. The temperature sensor 80 of this example is arranged in the collection tank 44. By means of the temperature sensor 80, a temperature of the water 20 in the collection tank 44 can be monitored. The temperature sensor 80 is in signal communication with the control system 46.

The filtration apparatus 10 of this example further comprises a pressure sensor 82. The pressure sensor 82 is configured to monitor an underpressure of the water 20. The pressure sensor 82 of this example is positioned in the outlet line 56. The pressure sensor 82 is in signal communication with the control system 46.

Polluted water 20 is conducted through the inlet line 38 to the filtration vessel 14. The inlet flow 54 is controlled by means of the inlet valve 52 based on signals from the inlet level sensor 74. In this way, the inlet level of water 20 in the filtration vessel 14 can be controlled, for example to a constant level. Coarse particles in the water 20 are filtered by the upstream filter 40. Finer particles are filtered by the filter cloth 28. The filtering element 16 may move continuously during filtration, but the filter speed may be controlled.

As the water 20 moves downstream in the outlet line 56, more room is made available upstream of the water 20 in the outlet line 56 below the filtering element 16. An underpressure is thereby created in the outlet line 56 below the filtering element 16. This underpressure can be measured by the pressure sensor 82. The temperature of the water 20 may for example be 20 °C. In this case, the water 20 boils at an underpressure of 0.1 bar. When the underpressure is reduced (to a lower absolute pressure value), the filter flow through the filtering element 16 is increased.

The difference between the atmospheric, or substantially atmospheric, pressure upstream of the filtering element 16 and the underpressure downstream of the filtering element 16 constitutes a differential pressure over the filtering element 16. By means of the geodetic difference in height of the outlet line 56, the gravity force of the water column in the outlet line 56 pulls the water 20 through the filtering element 16 to establish a differential pressure over the filtering element 16. In this way, a liquid pump for driving the water 20 out from the collection tank 44 can be avoided and the energy efficiency of the filtration apparatus 10 can thereby be improved.

Although bacteria can survive quite rapid and high pressure increases, bacteria cannot survive rapid pressure decreases. By subjecting the water 20 to a rapid pressure decrease over the filtering element 16, any living organisms in the water 20 will be killed.

The vacuum pump 68 sucks gases 70 out from the top of the collection tank 44 and discharges the gases 70 to the atmosphere. In this way, the water level in the collection tank 44 can be held constant. The vacuum pump 68 is therefore synchronized with the underpressure in the outlet line 56.

Fig. 2 schematically represents a perspective side view of the filtration arrangement 12. In Fig. 2, the two wheels 18a, 18b can be seen. The two wheels 18a, 18b here have the same shape, dimension and mass. Each wheel 18a, 18b is rotatable relative to the filtration vessel 14. The wheels 18a, 18b are also allowed to move vertically up and down relative to the filtration vessel 14. In this example, the wheels 18a, 18b rotate about a common rotation axis provided by a connection shaft 84. The wheels 18a, 18b are here allowed to rotate independently about the rotation axis.

The wheels 18a, 18b sealingly engage the filtering element 16 inside the filtration vessel 14 on opposite sides of the filtering element 16. Since the wheels 18a, 18b are allowed to rotate and move vertically relative to the filtration vessel 14, the wheels 18a, 18b compress the filtering element 16 inside the filtration vessel 14 by gravity and rotate together with the filtering element 16. The wheels 18a, 18b and the filtering element 16 thereby provide a rotatable seal of the filtration volume 22. The wheels 18a, 18b rotate along with the movement of the filtering element 16 along the path 26 inside the filtration vessel 14. Since the tangential speed of each of the wheels 18a, 18b corresponds to the speed on the respective side of the filtering element 16, friction losses between the wheels 18a, 18b and the filtering element 16 are eliminated.

In Fig. 2, the respective seat 24a, 24b on each wheel 18a, 18b can be seen. The seats 24a, 24b extend around the perimeter of the respective wheel 18a, 18b. The filtering element 16 is received in each seat 24a, 24b.

Fig. 2 further shows a lateral direction 86. The lateral direction 86 is perpendicular to the path 26. The filter cloth 28 and the carrier belt 30 have the same width in the lateral direction 86. The width of each of the filter cloth 28 and the carrier belt 30 may for example be 62 cm or larger, such as 132 cm.

The filter cloth 28 of this example is a metal wire cloth having a three-dimensional pore geometry. The wire cloth comprises warp wires and weft wires crossing each other and interwoven by a weave pattern. The warp wires are formed in at least two different configurations to define warp wires of first and second types. Pores are formed in interstices between sections of two neighboring warp wires and crossing sections of two neighboring weft wires. Due to this three-dimensional pore geometry, the filter cloth 28 has a constant permeability after a certain degree of clogging, for example when subjected to backwashing after each filtration cycle. The filter cloth 28 may for example be of the type Minimesh ^{®} RPD HIFLO-S sold by Haver & Boecker, such as RPD HIFLO 5 S, 10 S, 15 S, 20 S, 30 S or 40 S.

Fig. 3 schematically represents a partial perspective side view of the filtration arrangement 12. In Fig. 3, one example of a structure to realize the vertical movements of the wheels 18a, 18b relative to the filtration vessel 14 can be seen. On each side, the filtration arrangement 12 of this example comprises two vertical brackets 88 and a plate 90. The brackets 88 are fixed to the filtration vessel 14. The plates 90 are received between the associated brackets 88 and are guided vertically between the brackets 88. The wheels 18a, 18b are rotatably supported to the plates 90.

In Fig. 3, it can be seen that the filtration vessel 14 comprises a circular portion 92a. The circular portion 92a corresponds to the perimeter of the wheel 18a. The filtration vessel 14 comprises a corresponding circular portion 92b on the opposite side. The wheels 18a, 18b are forced by gravity into a respective of the circular portions 92a, 92b with the filtering element 16 squeezed therebetween. In this example, each circular portion 92a, 92b has an angular extension of approximately 150 degrees.

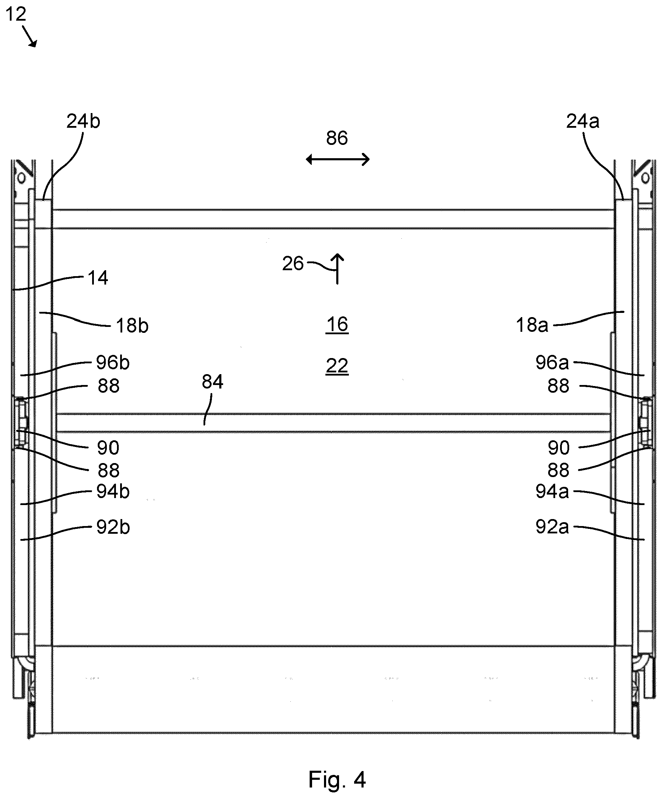

Fig. 3 further shows that a cavity 94a is provided laterally outside the wheel 18a between the wheel 18a and the filtration vessel 14. The filtration arrangement 12 comprises a corresponding cavity 94b (Fig. 4) laterally outside the wheel 18b between the wheel 18b and the filtration vessel 14.

Fig. 3 further shows that the filtration arrangement 12 comprises a stationary cavity sealing member 96a in the bottom of the cavity 94a, and a corresponding stationary cavity sealing member 96b (Fig. 4) in the bottom of the cavity 94b. Each stationary cavity sealing member 96a, 96b is circular and conforms to the profile of the respective circular portions 92a, 92b. Each stationary cavity sealing member 96a, 96b has an angular extension of approximately 150 degrees in this example. The stationary cavity sealing members 96a, 96b may be made of foam.

The cavities 94a, 94b are arranged to collect any overspill of water 20 due to splashing. The stationary cavity sealing members 96a, 96b prevent water 20 in the cavities 94a, 94b from joining filtrated water 20 downstream of the filtering element 16. A small flow of water 20 may intentionally be directed to each cavity 94a, 94b to provide some circulation of water 20 in the cavities 94a, 94b in order to prevent water 20 from resting in the cavities 94a, 94b for long time periods.

Fig. 4 schematically represents a partial top view of the filtration arrangement 12. In Fig. 4, the cavity 94b and the stationary cavity sealing member 96b can be seen. Fig. 4 further shows that the filtering element 16 is received in the seats 24a, 24b of the wheels 18a, 18b.

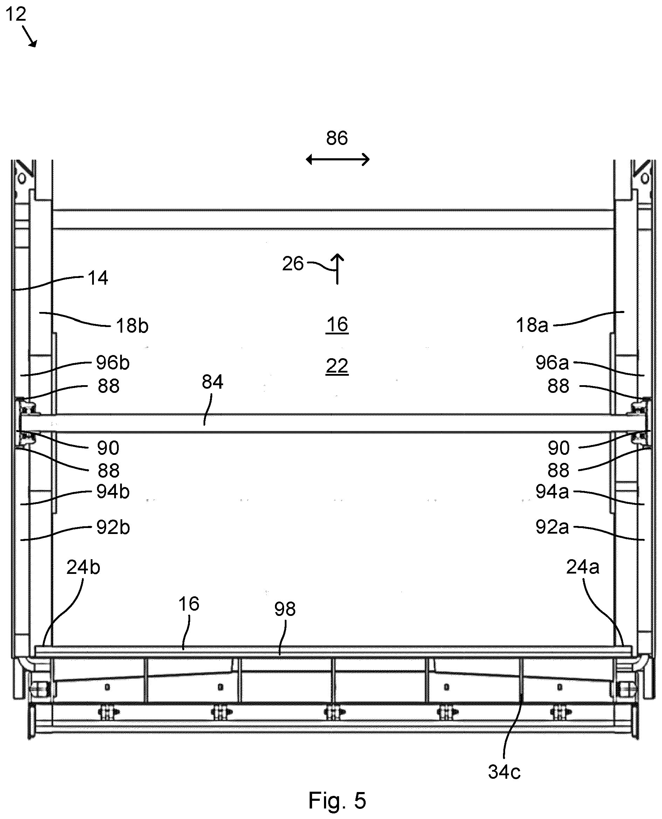

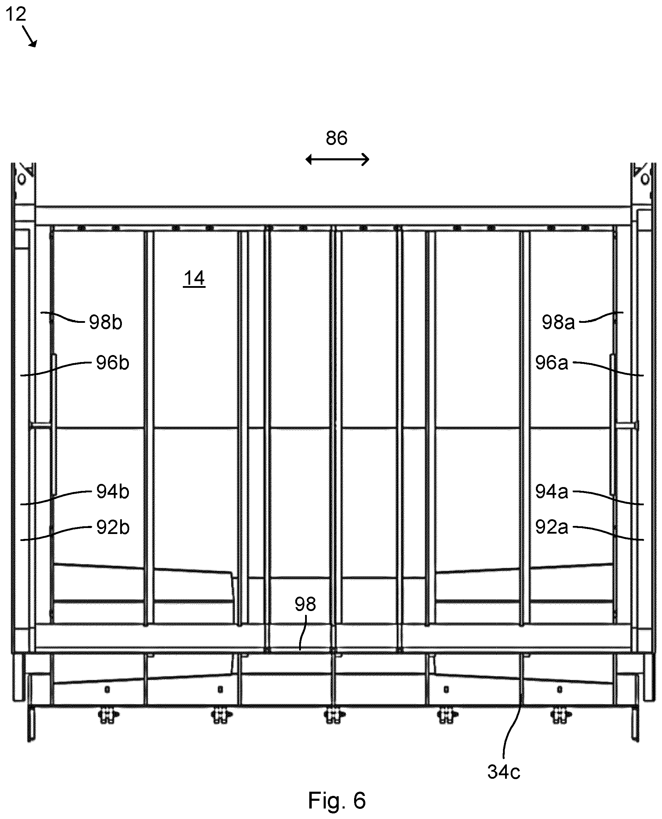

Fig. 5 schematically represents a partial cross-sectional top view of the filtration arrangement 12, and Fig. 6 schematically represents a partial cross-sectional top view of the filtration arrangement 12. In Fig. 6, the filtering element 16 is removed. With collective reference to Figs. 5 and 6, the filtration arrangement 12 further comprises stationary wheel sealing member 98, 98a, 98b. The stationary wheel sealing members 98, 98a, 98b may be integrally formed or rigidly connected to each other (directly or indirectly). The stationary wheel sealing members 98, 98a, 98b are fixed to the filtration vessel 14. As shown in Figs. 5 and 6, the stationary wheel sealing members 98, 98a, 98b are also received in the seats 24a, 24b, such that the filtering element 16 is positioned between the wheels 18a, 18b and the stationary wheel sealing members 98, 98a, 98b, and such that the stationary wheel sealing members 98, 98a, 98b are positioned between the filtering element 16 and the filtration vessel 14. The stationary wheel sealing member 98a is provided between the wheel 18a and the filtration vessel 14. The stationary wheel sealing member 98b is provided between the wheel 18b and the filtration vessel 14. The stationary wheel sealing member 98 is provided between both wheels 18a, 18b and the filtration vessel 14. The stationary wheel sealing members 98, 98a, 98b seal between the filtering element 16 and the circular portions 92a, 92b of the filtration vessel 14.

During movement of the filtering element 16, the wheels 18a, 18b rotate and there is no relative movement between the wheels 18a, 18b and the filtering element 16. The filtering element 16 slides on the stationary wheel sealing members 98, 98a, 98b. The stationary wheel sealing members 98, 98a, 98b are made of plastic to further reduce friction losses.

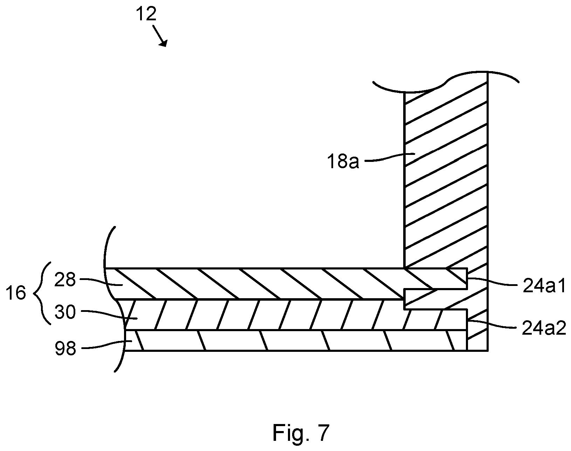

Fig. 7 schematically represents a cross-sectional top view of a further example of a sealing of the filtration arrangement 12. In Fig. 7, the wheel 18a comprises two seats 24a1, 24a2. The seats 24a1, 24a2 form a tortous structure. The filter cloth 28 is received in the seat 24a1. Both the carrier belt 30 and the stationary wheel sealing member 98 are received in the seat 24a2. The wheel 18b may be configured in a corresponding way. In this case, the filtration arrangement 12 comprises a rotatable labyrinth seal.

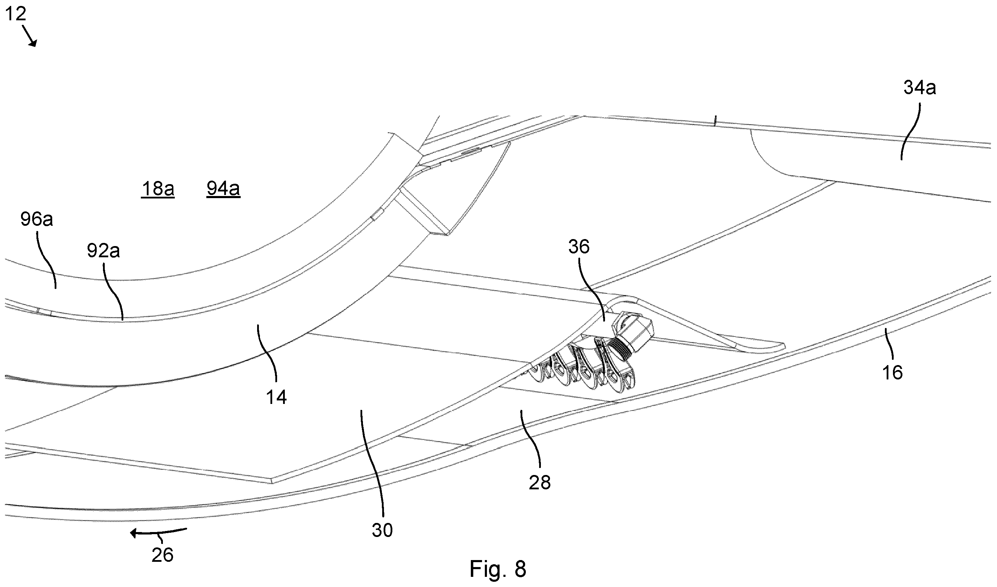

Fig. 8 schematically represents a partial perspective side view of the filtration arrangement 12. As shown in Fig. 8, the filtration arrangement 12 is configured to separate the filter cloth 28 from the carrier belt 30 in a region outside the filtration vessel 14, here vertically below the filtration vessel 14. The fluid ejecting device 36 is positioned between the carrier belt 30 and the filter cloth 28 and thereby guides the carrier belt 30 above the fluid ejecting device 36 and the filter cloth 28 below the fluid ejecting device 36. This enables the fluid ejecting device 36 to be positioned closer to the filter cloth 28. The fluid ejecting device 36 is positioned in a region where the filter cloth 28 hangs freely, here between the rollers 34a and 34b.

The fluid ejecting device 36 is configured to provide a stream of air to the filter cloth 28. The air stream is provided substantially vertically downwards, and outwards with respect to the loop formed by the filter cloth 28. At the same time, the fluid ejecting device 36 supports the carrier belt 30.

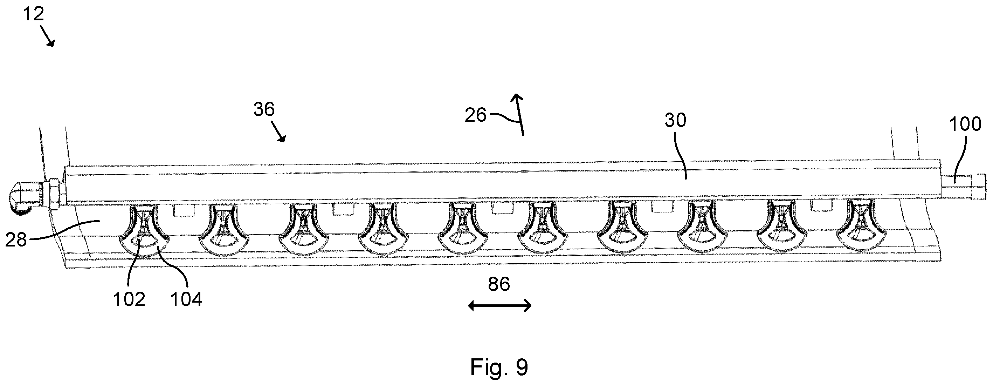

Fig. 9 schematically represents a partial perspective rear view of the filtration arrangement 12. As shown in Fig. 9, the fluid ejecting device 36 comprises a fluid pipe 100 and a plurality of fluid ejecting tubes 102, here ten fluid ejecting tubes 102. The fluid ejecting tubes 102 are here aligned in the lateral direction 86. Pressurized air is led into the fluid pipe 100 and further to each fluid ejecting tube 102.

The fluid ejecting device 36 further comprises a tube guide 104 for each fluid ejecting tube 102. Each tube guide 104 limits movement of the associated fluid ejecting tube 102 to the lateral direction 86. The fluid ejecting tubes 102 are flexible. The air stream from the fluid ejecting tubes 102 to the filter cloth 28 blow particles out from the filter cloth 28. Besides, when air is supplied to the fluid ejecting tubes 102, the fluid ejecting tubes 102 oscillate in the lateral direction 86. This causes the air stream onto the filter cloth 28 to vary. As a consequence, vibrations are induced in the filter cloth 28. These vibrations provide an additional removal of particles from the filter cloth 28. That is, the filter cloth 28 is both subjected to an air stream to remove particles, and is shaken to remove particles.

The oscillations of the fluid ejecting tubes 102 also result in that the entire width of the filter cloth 28 will be covered by the air stream. The fluid pipe 100 may be supplied with a constant flow of air. Alternatively, the flow of air may be varied to provide a varying air stream to induce vibrations of the filter cloth 28.

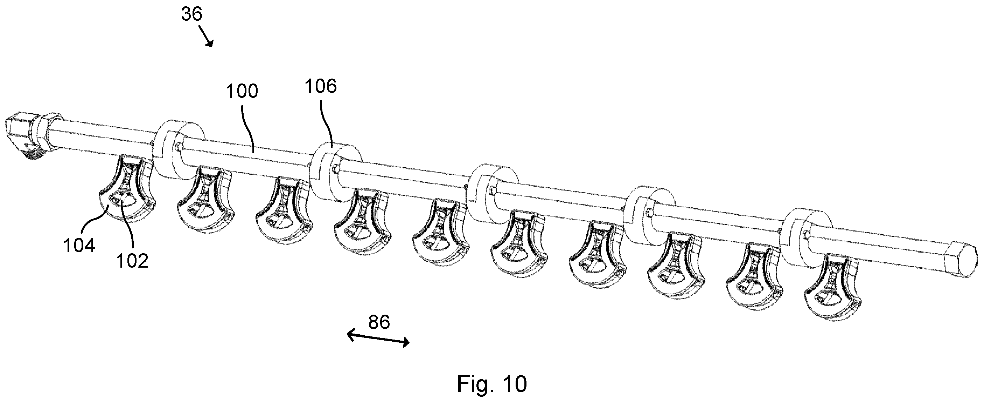

Fig. 10 schematically represents a partial perspective side view of the fluid ejecting device 36. As shown in Fig. 10, the fluid ejecting device 36 further comprises a plurality of carrier supports 106, here five carrier supports 106. The carrier supports 106 of this example are annular and enclose the stationary fluid pipe 100. The carrier supports 106 support the carrier belt 30.

## Claims

1. A filtration arrangement (12) for a filtration apparatus (10) for filtrating liquid (20), the filtration arrangement (12) comprising:
- a filtration vessel (14) comprising two circular portions (92a, 92b);
- a continuous filtering element (16) for removing particles from liquid (20) passing therethrough, the filtering element (16) being arranged to move along a path (26) into the filtration vessel (14) and out from the filtration vessel (14);
- two wheels (18a, 18b) sealingly engaging the filtering element (16) on opposite sides thereof inside the filtration vessel (14), where each of the two wheels (18a, 18b) is rotatable relative to the filtration vessel (14) along with movement of the filtering element (16), and where the two wheels (18a, 18b) are forced into a respective of the circular portions (92a, 92b) with the filtering element (16) therebetween; and
at least one stationary wheel sealing member (98, 98a, 98b) arranged to seal between the filtering element (16) and a respective of the circular portions (92a, 92b).

2. The filtration arrangement (12) according to claim 1, wherein the two wheels (18a, 18b) are vertically movable relative to the filtration vessel (14).

3. The filtration arrangement (12) according to any of the preceding claims, wherein each wheel (18a, 18b) comprises at least one seat (24a, 24b), and wherein the filtering element (16) is received in the seats (24a, 24b).

4. The filtration arrangement (12) according to claim 3, wherein each stationary wheel sealing member (98, 98a, 98b) is received in a respective of the seat (24a, 24b).

5. The filtration arrangement (12) according to any of the preceding claims, wherein the at least one stationary wheel sealing member (98, 98a, 98b) is made of plastic material.

6. The filtration arrangement (12) according to any of the preceding claims, wherein the filtration vessel (14) comprises two cavities (94a, 94b) laterally outside the respective wheels (18a, 18b).

7. The filtration arrangement (12) according to claim 6, further comprising a stationary cavity sealing member (96a, 96b) in a bottom of each cavity (94a, 94b).

8. A filtration apparatus (10) for filtrating liquid (20), the filtration apparatus (10) comprising a filtration arrangement (12) according to any of the preceding claims.

## Patentansprüche

1. Filtrationsanordnung (12) für eine Filtrationsvorrichtung (10) zum Filtrieren von Flüssigkeit (20), wobei die Filtrationsanordnung (12) Folgendes umfasst:
- ein Filtrationsgefäß (14), das zwei kreisförmige Abschnitte (92a, 92b) umfasst;
- ein kontinuierliches Filterungselement (16) zum Entfernen von Teilchen aus einer Flüssigkeit (20), die durch dasselbe hindurchgeht, wobei das Filterungselement (16) dafür angeordnet ist, sich entlang einer Bahn (26) in das Filtrationsgefäß (14) und aus dem Filtrationsgefäß (14) zu bewegen;
- zwei Räder (18a, 18b), die das Filterungselement (16) auf entgegengesetzten Seiten desselben innerhalb des Filtrationsgefäßes (14) abdichtend in Eingriff nehmen, wobei jedes von den zwei Rädern (18a, 18b) zusammen mit einer Bewegung des Filterungselements (16) im Verhältnis zu dem Filtrationsgefäß (14) drehbar ist und wobei die zwei Räder (18a, 18b) mit dem Filterungselement (16) zwischen denselben in einen jeweiligen von den kreisförmigen Abschnitten (92a, 92b) gedrängt werden; und
mindestens ein unbewegliches Radabdichtungselement (98, 98a, 98b), das dafür angeordnet ist, zwischen dem Filterungselement (16) und einem jeweiligen von den kreisförmigen Abschnitten (92a, 92b) abzudichten.

2. Filtrationsanordnung (12) nach Anspruch 1, wobei die zwei Räder (18a, 18b) im Verhältnis zu dem Filtrationsgefäß (14) in Vertikalrichtung beweglich sind.

3. Filtrationsanordnung (12) nach einem der vorhergehenden Ansprüche, wobei jedes Rad (18a, 18b) mindestens einen Sitz (24a, 24b) umfasst und wobei das Filterungselement (16) in den Sitzen (24a, 24b) aufgenommen wird.

4. Filtrationsanordnung (12) nach Anspruch 3, wobei jedes unbewegliche Radabdichtungselement (98, 98a, 98b) in einem jeweiligen von den Sitzen (24a, 24b) aufgenommen wird.

5. Filtrationsanordnung (12) nach einem der vorhergehenden Ansprüche, wobei das mindestens eine unbewegliche Radabdichtungselement (98, 98a, 98b) aus Kunststoffmaterial hergestellt ist.

6. Filtrationsanordnung (12) nach einem der vorhergehenden Ansprüche, wobei das Filtrationsgefäß (14) zwei Hohlräume (94a, 94b) seitlich außerhalb der jeweiligen Räder (18a, 18b) umfasst.

7. Filtrationsanordnung (12) nach Anspruch 6, die ferner ein unbewegliches Hohlraumabdichtungselement (96a, 96b) in einem unteren Teil jedes Hohlraums (94a, 94b) umfasst.

8. Filtrationsvorrichtung (10) zum Filtrieren von Flüssigkeit (20), wobei die Filtrationsvorrichtung (10) eine Filtrationsanordnung (12) nach einem der vorhergehenden Ansprüche umfasst.

## Revendications

1. Ensemble de filtration (12) pour un appareil de filtration (10) destiné à filtrer un liquide (20), l'ensemble de filtration (12) comprenant :
- une cuve de filtration (14) comprenant deux parties circulaires (92a, 92b) ;
- un élément de filtration continue (16) destiné à retirer des particules du liquide (20) passant à travers celui-ci, l'élément de filtration (16) étant conçu pour se déplacer le long d'un trajet (26) vers l'intérieur de la cuve de filtration (14) et hors de la cuve de filtration (14) ;
- deux roues (18a, 18b) engageant de façon étanche l'élément de filtration (16) sur des côtés opposés de celui-ci à l'intérieur de la cuve de filtration (14), où chacune des deux roues (18a, 18b) est rotative par rapport à la cuve de filtration (14) ensemble avec le déplacement de l'élément de filtration (16), et où les deux roues (18a, 18b) sont forcées dans l'une respective des parties circulaires (92a, 92b) avec l'élément de filtration (16) entre celles-ci ; et
au moins un élément d'étanchéité de roue stationnaire (98, 98a, 98b) conçu pour assurer l'étanchéité entre l'élément de filtration (16) et l'une respective des parties circulaires (92a, 92b).

2. Ensemble de filtration (12) selon la revendication 1, dans lequel les deux roues (18a, 18b) sont déplaçables verticalement par rapport à la cuve de filtration (14).

3. Ensemble de filtration (12) selon l'une quelconque des revendications précédentes, dans lequel chaque roue (18a, 18b) comprend au moins un siège (24a, 24b), et dans lequel l'élément de filtration (16) est reçu dans les sièges (24a, 24b).

4. Ensemble de filtration (12) selon la revendication 3, dans lequel chaque élément d'étanchéité de roue stationnaire (98, 98a, 98b) est reçu dans l'un respectif des sièges (24a, 24b).

5. Ensemble de filtration (12) selon l'une quelconque des revendications précédentes, dans lequel l'au moins un élément d'étanchéité de roue stationnaire (98, 98a, 98b) est constitué d'une matière plastique.

6. Ensemble de filtration (12) selon l'une quelconque des revendications précédentes, dans lequel la cuve de filtration (14) comprend deux cavités (94a, 94b) latéralement à l'extérieur des roues (18a, 18b) respectives.

7. Ensemble de filtration (12) selon la revendication 6, comprenant en outre un élément d'étanchéité de cavité stationnaire (96a, 96b) dans un fond de chaque cavité (94a, 94b).

8. Appareil de filtration (10) destiné à filtrer un liquide (20), l'appareil de filtration (10) comprenant un ensemble de filtration (12) selon l'une quelconque des revendications précédentes.
